# EUROPEAN PATENT SPECIFICATION

(11) **EP 4 057 829 B1**
(45) Date of publication and mention of the grant of the patent: **21.02.2024**
(21) Application number: 20801132.0
(22) Date of filing: 13.11.2020
(51) Int. Cl.: A23K 20/24, A23K 20/20, C05C 3/00, C05C 9/00, C05D 3/00, C05D 9/02, C05G 3/90, C05G 5/12

(54) **UREA AMMONIUM SULPHATE-BASED COMPOSITION AND METHOD FOR THE MANUFACTURE THEREOF**
ZUSAMMENSETZUNG AUF HARNSTOFFAMMONIUMSULFATBASIS UND VERFAHREN ZU DEREN HERSTELLUNG
COMPOSITION À BASE DE SULFATE D'AMMONIUM D'URÉE ET SON PROCÉDÉ DE FABRICATION

(30) Priority: 15.11.2019 EP 19209468
(43) Date of publication of application: 21.09.2022
(73) Proprietor: Yara International ASA, 0277 Oslo (NO)
(72) Inventor: COLPAERT, Filip, 9052 Zwijnaarde (BE); DONKERS, Ellen Henrica Diana, 4533 HS Terneuzen (NL); VAN BELZEN, Ruud, 4541 HJ Sluiskil (NL); VAN DE WALLE, Tom, 9180 Moerbeke-Waas (BE); VAN ELSLANDE, Paul, 4541 HJ Sluiskil (NL)
(74) Representative: De Clercq & Partners
(86) International application number: PCT/EP2020/082008
(87) International publication number: WO 2021/094510

(56) References cited:
- EP-A1- 3 567 018
- WO-A1-2017/042194
- WO-A1-2017/081183
- WO-A1-2017/168288
- DATABASE WPI Week 201706 Thomson Scientific, London, GB; AN 2016-719005 XP002798981, & CN 106 069 441 A (WANGJIANG NONGWANG AGRIC SPECIALIZED COOP) 9 November 2016 (2016-11-09)
- DATABASE WPI Week 201580 Thomson Scientific, London, GB; AN 2015-62814W XP002798982, & CN 104 860 775 A (GUANGDE LIMIN IRRIGATION & WATER CONSERV) 26 August 2015 (2015-08-26)
- SHI L: "Special fertilizer used for increasing rice production yield includes rapeseed cake, fermented manure, urea, ammonium sulfate, calcium nitrate, diammonium phosphate, potassium chloride, magnesium sulfate, zinc sulfate, and soil conditioner", WPI / 2017 CLARIVATE ANALYTICS,, vol. 2015, no. 80, 26 August 2015 (2015-08-26), XP002798982,
- XU J ET AL: "Planting high quality rice involves applying base fertilizer in paddy field, where base fertilizer comprises duck manure, biological carbon, urea, diammonium phosphate, calcium sulfate, marigold flower powder, Anemone and biological fungus", WPI / 2017 CLARIVATE ANALYTICS,, vol. 2017, no. 6, 9 November 2016 (2016-11-09), XP002798981,

## Description

### Field of the invention

This invention relates to a solid, particulate, urea ammonium sulphate-based composition, further comprising one or more alkaline or alkaline-forming inorganic or organic compounds that are able to interact with ammonium sulphate, a urease inhibitor of the type phosphoric triamide, and a cation source comprising a cation selected from the group consisting Fe²⁺ , Fe³⁺ , Mn²⁺ , Zn²⁺ as zinc sulphate, and Ni²⁺ .

The invention further relates to a method for the manufacture of a solid, particulate urea ammonium sulphate-based composition comprising urea, ammonium sulphate, a urease inhibitor of the type phosphoric triamide, in particular N-(n-butyl) thiophosphoric triamide (nBTPT), one or more alkaline or alkaline-forming inorganic or organic compounds and a cation source selected from the grouü consisting of Fe2+ , Fe3+ , Mn2+ , Zn2+ as zinc sulphate, and Ni2+ . The product is in particular suitable for use as a fertilizer.

### Background of the invention

Urea is the most common nitrogen-containing fertilizer worldwide. Urea has the highest nitrogen content of all nitrogen-containing fertilizers in common use (46 %). Its consumption worldwide has been considerably increased, from about 20 million tons in the early seventies to about 100 million tons at the beginning of the twenty first century. Nitrogen is the basic constituent for any living system as a constituent of protein.

Due to intensive farming and the reduction of sulphur emissions in the air by industry and the subsequent supply to the ground via rain, modern agriculture requires sulphur in addition to nitrogen.

Good agricultural practice usually requires nitrogen and sulphur in a ratio 10/1 to 5/1 in order to answer to the crop demand, for example 150 kg nitrogen/ha/year and 30 kg sulphur/ha/year.

Lack of sulphur results both in a lower quantity and a lower quality of crops, and sulphur deficiency is often reflected in the content and type of proteins. Sulphur is indeed a major element entering the chemistry of the cells in molecules such as amino acids (cysteine, methionine, etc.). It is also a catalyst for the photosynthesis and, in some cases, may improve the fixation of atmospheric nitrogen.

Conventionally, sulphur has been applied to the soil in the form of elemental sulphur, or as compounds such as ammonium sulphate, ammonium bisulphate, thiosulphates, sulphides or gypsum, or in combination with other fertilizer materials such as urea, for example as a physical blend of urea and ammonium sulphate, or as a co-granulated urea and ammonium sulphate material, the latter which is hereinafter called urea ammonium sulphate, abbreviated as UAS.

The urea that is present in UAS is hydrolysed in the soil under the action of an enzyme catalyst, commonly called urease, to produce ammonia and carbon dioxide. Ureases are found in numerous bacteria, fungi, algae, plants and some invertebrates, as well as in soils, as a soil enzyme. Urease activity tends to increase the pH of its environment as ammonia, a basic compound is dissolved into the water in the soil. Ammonia can then be protonated to form ammonium ions, which are oxidized to nitrate ions, the preferred form of nitrogen from plants. Since plants cannot absorb urea, the urease activity is necessary to provide nitrogen to the plants. However, if ammonia is not transformed quickly into ammonium or if an excess of ammonia builds up in the soil, it can also be released into the atmosphere, thus becoming unavailable for the plant root system, a process called ammonia volatilization. Up to 50 weight% of nitrogen can be lost as a result of the volatilization of ammonia, all depending on the soil type, water content, pH, climate conditions, etc.

The availability of nitrogen, originating from urea, to the root system of plants can be improved by combining (i.e. by incorporation or addition) a urease inhibitor with a urea-containing fertilizer. Urease inhibitors are compounds that are capable of temporarily reducing the activity of the enzyme and slow down the rate at which urea is hydrolysed. When the urease activity is reduced, it gives more time to oxidize the ammonium to nitrates and avoids the build-up of ammonia in the soil. There are many compounds that can inhibit urease, but only a few that are non-toxic to plants, effective at low concentrations, chemically stable enough and able to be combined with urea-containing fertilizers.

Among the most effective urease inhibitors known today are the phosphoric triamide compounds, first disclosed in US 4,530,714 (Allied Corporation, 1985).

An example of an effective urease inhibitor, disclosed in said patent is N-(n-butyl) thiophosphoric triamide, which will be referred to herein as nBTPT. This compound is actually the precursor for the active compound N-(n-butyl) phosphoric triamide (nBPT), obtained through oxidation of the thio-compound, but it is the thio-compound that is commonly produced, sold and used. Throughout this application, when referring to urease inhibitors of the type phosphoric triamide, it is understood that this comprises all active compounds, active precursors and active conversion products, resulting from said phosphoric triamides.

When combined with a urea-containing fertilizer, phosphoric tri-amide compounds reduce the rate at which urea is hydrolysed to ammonia in the soil. The benefits that are realized as a result of the delayed urea hydrolysis include the following: (1) nutrient nitrogen is available to the plant over a longer period of time, (2) excessive build-up of ammonia in the soil following the application of the urea-containing fertilizer is avoided, (3) the potential for nitrogen loss through ammonia volatilization is reduced, (4) the potential for damage by high levels of ammonia to seedlings and young plants is reduced, (5) plant uptake of nitrogen is increased, and (6) an increase in crop yields is attained. While phosphoric triamide compounds do not directly influence the rate of ammonium nitrification, they do control the levels of ammonium which are subject to the nitrification process and thereby indirectly controls the levels of nitrate nitrogen in the soil.

EP 3567018A1 (Yara International ASA, 2019) discloses a composition comprising urea, ammonium sulphate, nBTPT, magnesium oxide and magnesium sulphate.

WO 2017/081183A1 (Yara International ASA, 2017) discloses compositions comprising urea, ammonium sulphate, nBTPT and an alkaline or alkaline-forming compound.

CN 106069441A (Wangjiang Nongwang Agric Specialized Coop, 2016) discloses a composition comprising urea, ammonium sulphate, nBTPT, zinc sulphate, and magnesium sulphate. WO2017168288A1 (BASF, 2018) discloses the use of a cation source, such as magnesium sulfate, to reduce the ammonium emissions of a physical blend of urea coated with solid nBTPT and diammonium phosphate.

CN 104860775A (Guangde Limin Irrigation & Water Conserv, 2015) discloses a composition comprising urea, ammonium sulphate, nBTPT, zinc sulphate, and magnesium sulphate. However, it has now been shown, as for example in WO2017042194 (Yara, 2017), that urease inhibitors of the type phosphoric triamide, especially when applied as a liquid, which is the most common commercially available form, are not stable when in contact with a urea ammonium sulphate-based composition. Moreover, even a urease inhibitor of the type phosphoric triamide in an alkaline organic solvent, such as a mixture of propylene glycol and N-methylpyrrolidine, stabilised to allow for long storage time of the solution, is rapidly degraded once applied on a urea ammonium sulphate-based composition. Furthermore, the urease inhibitor of the type phosphoric triamide, also applied as a solid, is not stable when in contact with a urea ammonium sulphate-based composition. The problem is most relevant for the storage of said urea ammonium sulphate-based composition, where the urea ammonium sulphate-based composition in particulate form and the urease inhibitor of the type phosphoric triamide are in intimate contact with one another for a prolonged period.

WO2017042194 discloses a UAS-based composition comprising a urease inhibitor of the type phosphoric triamide and an alkaline or alkaline-forming compound such as calcium oxide (CaO), calcium carbonate (CaCO₃), zinc oxide (ZnO) and ethanolamine. The alkaline or alkaline-forming compound increases the stability of the urease inhibitor when both compounds are coated on UAS granules. However, the inventors noted that such compositions release ammonia gas upon prolonged storage. This is not desirable from a safety point of view, so there is a need to prepare UAS-based composition comprising a urease inhibitor and a stabilizer which increases the stability of the inhibitor but does not emit ammonia gas.

### Summary of the invention

In a first aspect, the present invention discloses a solid, particulate, urea ammonium sulphate (UAS)-based composition comprising urea, ammonium sulphate, a urease inhibitor of the type phosphoric triamide and one or more alkaline or alkaline-forming inorganic or organic compounds that is able to interact with ammonium sulphate, selected from the group consisting of metal oxides, metal carbamates, metal hydroxides, metal acetates and any mixtures thereof, or from the group of organic bases consisting of ammonia, amines, amides, adenines, amidines, guanidines, anilines, carbamates, thiazoles, triazoles, pyridines; imidazoles, benzimidazoles, histidines, phosphazenes, and any mixture thereof. The UAS-based composition further comprises a cation source, different from the one or more alkaline or alkaline-forming inorganic or organic compounds, comprising a cation selected from the group consisting of Fe2+ , Fe3+ , Mn2+ , Zn2+ as zinc sulphate, and Ni2+ .

In another aspect, the use of the UAS-based composition according to the present disclosure as a fertilizer, in particular for supporting the growth of agricultural products on a sulphur - deficient soil, is provided.

In another aspect, a method for the manufacture of a solid, particulate, urea ammonium sulphate-based composition is provided. The method comprises the steps of: 1) providing a urea ammonium sulphate-based material; 2) providing a cation source comprising a cation selected from the group consisting of Fe2+ , Fe3+ , Mn2+ , Zn2+ as zinc sulphate, and Ni2+; 3) providing a urease inhibitor of the type phosphoric triamide, in particular N-(n-butyl) thiophosphoric triamide (nBTPT); 4) providing an alkaline or alkaline-forming compound that is able to interact with ammonium sulphate, selected from the group consisting of metal oxides, metal carbamates, metal hydroxides, metal acetates and any mixtures thereof, or from the group of nitrogen-containing organic bases consisting of ammonia, amines, amides, adenines, amidines, guanidines, anilines, carbamates, thiazoles, triazoles, pyridines; imidazoles, benzimidazoles, histidines, phosphazenes, and any mixture thereof, in particular a compound selected from the group consisting of calcium oxide, zinc oxide, magnesium oxide, calcium carbonate, and mixtures thereof, 5) optionally, providing coating material, wherein the coating material is able to increase at least the anticaking and/or moisture repellence and/or anti-dust properties of said urea ammonium sulphate-based composition; and 6) adding the components provided in steps 2), 3), 4) and 5) in any order to the component provided in step 1).

Mention is also done to a kit of parts for applying to a UAS-bas composition. The kit of parts comprises a) a cation source comprising a cation selected from the group consisting Fe2+ , Fe3+ , Mn2+ , Zn2+ as zinc sulphate, and Ni2+; b) a urease inhibitor of the type phosphoric triamide, in particular N-(n-butyl) thiophosphoric triamide (nBTPT); c) an alkaline or alkaline-forming compound, in particular magnesium oxide, and d) optionally, one or more anti-caking and/or moisture-repellent and/or anti-dust compounds.

A method has also been described for improving the stability of a urease inhibitor of the type phosphoric triamide, in particular N-(n-butyl) thiophosphoric triamide (nBTPT), in a urea ammonium sulphate-based composition is provided. The UAS-based composition comprises UAS, an alkaline or alkaline-forming compound that is able to interact with ammonium sulphate, selected from the group consisting of metal oxides, metal carbamates, metal hydroxides, metal acetates and any mixtures thereof, or from the group of nitrogen-containing organic bases consisting of ammonia, amines, amides, adenines, amidines, guanidines, anilines, carbamates, thiazoles, triazoles, pyridines, imidazoles, benzimidazoles, histidines, phosphazenes, and any mixture thereof, and the urease inhibitor. The method comprises the step of adding to the UAS-based composition a cation source comprising a cation, selected from the group consisting Fe2+ , Fe3+ , Mn2+ , Zn2+ as zinc sulphate, and Ni2+ .

In another aspect, a method for reducing the ammonia emissions during storage of a urea ammonium sulphate-based composition is provided. The UAS-based composition comprises a urease inhibitor of the type phosphoric triamide, in particular N-(n-butyl) thiophosphoric triamide (nBTPT), and an alkaline or alkaline-forming compound that is able to interact with ammonium sulphate, selected from the group consisting of metal oxides, metal carbamates, metal hydroxides, metal acetates and any mixtures thereof, or from the group of nitrogen-containing organic bases consisting ofammonia, amines, amides, adenines, amidines, guanidines, anilines, carbamates, thiazoles, triazoles, pyridines; imidazoles, benzimidazoles, histidines, phosphazenes, and any mixture thereof. The method comprises the step of adding to the urea ammonium sulphate-based composition of a cation source comprising a cation, selected from the group consisting of Fe2+ , Fe3+ , Mn2+ , Zn2+ as zinc sulphate, and Ni2+ and in the amounts defined in the claims.

### Brief description of the figures

Figure 1 describes the amount of nBTPT recovered after storage of urea ammonium sulphate-based compositions in bags at room temperature.
Figure 2 describes the amount of ammonia in vol% in containers containing urea ammonium sulphate-based compositions.
Figure 3 describes the amount of nBTPT recovered after storage of urea ammonium sulphate-based compositions in bags at room temperature.
Figure 4 describes the amount of ammonia in vol% in containers containing urea ammonium sulphate-based compositions.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the UAS-based composition.

The inventors have found that adding a cation source to UAS-based compositions comprising a urease inhibitor of the type phosphoric triamide and an alkaline or alkaline-forming compound alleviates one or more issues aforementioned.

In its broadest concept, the invention is concerned with a solid, particulate, urea ammonium sulphate (UAS)-based composition comprising urea, ammonium sulphate, 0.0001 to 1.0 weight% of a urease inhibitor of the type phosphoric triamide and 0.0001 to 5.0 weight% of one or more alkaline or alkaline-forming inorganic or organic compounds that is able to interact with ammonium sulphate, selected from the group consisting of metal oxides, metal carbamates, metal hydroxides, metal acetates and any mixtures thereof, or from the group of organic bases consisting of ammonia, amines, amides, adenines, amidines, guanidines, anilines, carbamates, thiazoles, triazoles, pyridines; imidazoles, benzimidazoles, histidines, phosphazenes, and any mixture thereof, characterized in that the UAS-based composition further comprises 0.0001 to 5.0 weight% of a cation source, comprising a cation selected from the group consisting of Fe²⁺, Fe³⁺, Mn²⁺, Zn²⁺ as zinc sulphate, and Ni²⁺, and wherein the cation source is different from the one or more alkaline or alkaline-forming inorganic or organic compounds.

From other fields of science, e.g. in water treatment, it is known that some metal complexes, for example those comprising a metal ion selected from the group consisting of Zn²⁺, Fe ²⁺, Fe ³⁺,Cu⁺, Cu²⁺, Ni²⁺, Ag⁺, Pt²⁺, Ru²⁺, Co³⁺ and Cr³⁺, have the ability to exchange ligands with ammonia and form metal ammine complexes. Without being bound by theory, it is thought that ammonia is released in the products described in WO2017042194 by the water-supported reaction between the ammonium sulphate and the alkaline or alkaline-forming compound comprised in the compositions. It was envisioned that adding a metal salt or complex that is able to complex ammonia would be able to capture the ammonia released by the fertilizer. Surprisingly, it was observed that other metals, such as Fe²⁺, Fe³⁺, Mn²⁺ were also able to absorb ammonia and form metal ammine complexes.

Further, it was observed that these cation sources do not lead to any significantly increased decomposition of the urease inhibitor present in the UAS-based composition.

### Urease Inhibitor

In one embodiment, this disclosure is concerned with a solid, particulate, urea ammonium sulphate-based composition comprising a urease inhibitor of the type phosphoric triamide, in particular N-(n-butyl) thiophosphoric triamide (nBTPT), wherein the urease inhibitor of the type phosphoric triamide is a compound of formula I: 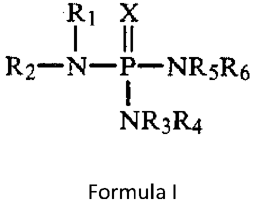 wherein :
X is oxygen or sulphur;
R1 is alkyl, cycloalkenyl, aralkyl, aryl, alkenyl, alkynyl, or cycloalkyl;
R2 is hydrogen, alkyl, cycloalkenyl, aralkyl, aryl, alkenyl, alkynyl, or cyclo-alkyl, or R1 and R2 together may form an alkylene or alkenylene chain which may optionally include one or more heteroatoms of divalent oxygen, nitrogen or sulphur completing a 4, 5, 6, 7, or 8 membered ring system; and
R3, R4, R5 and R6 are individually hydrogen or alkyl having 1 to 6 carbon atoms. In the present specification and claims, the term "phosphoric triamide compounds" is used to refer to the compounds of formula I.

The terms alkyl, cycloalkenyl, aralkyl, aryl, alkenyl, alkynyl, and cycloalkyl as used herein, refer to compounds having from up to 10 carbon atoms, in particular up to 6 carbon atoms. The lowest number of carbon atoms is between 1-3 depending on the structure of the substituent.

In one embodiment, the urease inhibitor is nBTPT. nBTPT is sold as the most effective known urease inhibitor and has the following chemical formula II:

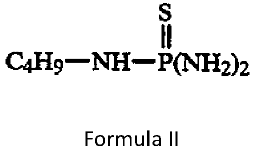

It should be understood that the term nBTPT, as used throughout this specification, refers not only to N-(n-butyl) thiophosphoric triamide in its pure form, but also to industrial grades of this compound which may contain up to 50 weight% impurities, depending on the method of synthesis and purification scheme(s), if any, employed in the production of the nBTPT.

In order to be effective, the urease inhibitor of the type phosphoric triamide, in particular N-(n-butyl) thiophosphoric triamide (nBTPT) is present in the urea ammonium sulphate-based composition at a level of 0.0001 to 1.0 weight%, in particular 0.02 to 0.2% weight%, more in particular 0.03 to 0.06 weight%, relative to the total weight of the urea ammonium sulphate-based composition. It was found that an amount of urease inhibitor between 0.0001 to 1.0 weight% is satisfying in the UAS-based compositions of the present disclosure. In one embodiment, the urease inhibitor is present at a level of around 0.05 weight%.

In one embodiment, the weight ratio of urease inhibitor of the type phosphoric triamide to the one or more alkaline or alkaline-forming inorganic or organic compounds in the compositions according to the invention ranges from 1:15 to 5:1, in particular from 1:10 to 2:1, more in particular from 1:5 to 2:1. In order to obtain a good stabilization effect of the urease inhibitor, it is desirable to adapt the amount of stabilizing agent, the one or more alkaline or alkaline-forming inorganic or organic compounds, to the amount of urease inhibitor used in the UAS-based compositions. Too much stabilizer would only increase the manufacturing cost without improving the stabilization of the urease inhibitor, but too little stabilizer would not have the desired stabilizing effect. Examples of suitable inhibitor to stabilizer ratios are 1:1 or 2:1.

In one embodiment, the urease inhibitor of the type phosphoric triamide is applied onto the urea ammonium sulphate-based composition in liquid or in particulate form, is melt-mixed with the urea ammonium sulphate-based composition, or a combination thereof.

In one embodiment, the urease inhibitor can be a liquid at room temperature, a liquid at elevated temperature, or a solid which is dissolved (solution) or suspended (suspension) into a liquid carrier, all of which are different liquid forms of the urease inhibitor of the type phosphoric triamide, in particular N-(n-butyl) thiophosphoric triamide (nBTPT).

In embodiments where the urease inhibitor of the type phosphoric triamide, in particular N-(n-butyl) thiophosphoric triamide (nBTPT), is used as a liquid, it may be used as a 0.1 to 75 weight% solution, in particular as a 15 to 30 weight% solution, relative to the total weight of the solution. Commercial solutions are available, for example as Agrotain^{®} Ultra (Koch, US), N Yield^{™} (Eco Agro, The Netherlands), Rhodia Ag-Rho^{™} N Protect B (Solvay, Germany), Iper N-Protect Liquid (Van Iperen, The Netherlands) and BASF Limus (BASF, Germany).

In embodiments where the urease inhibitor nBTPT is used as a liquid, dissolved into a carrier, it can be used as a powder, dissolved in propylene glycol, for example as 17,5 weight% of nBTPT. Solid nBTPT may also be used as a 25 weight% solution in diethylene glycol monobutyl ether.

Experiments showed that, in compositions according to the invention, less urease inhibitor of the type phosphoric triamide, in particular N-(n-butyl) thiophosphoric triamide (nBTPT) needs to be used than is commonly employed in the prior art. For example, according to the invention, an amount of around 0.05 weight% is recommended, while for the use of Agrotain^{®} Ultra, an amount of 0.09 weight% is recommended. This finding can at least partly be attributed to the fact that in the compositions according to the invention, the urease inhibitor of the type phosphoric triamide, in particular N-(n-butyl) thiophosphoric triamide (nBTPT) is stabilized, while in the prior art, an overdose is needed to compensate for the degradation of the urease inhibitor and to increase shelf-live thereof. This finding also ensures that less urease inhibitor of the type phosphoric triamide, in particular N-(n-butyl) thiophosphoric triamide (nBTPT) is introduced into the environment.

In embodiments where the urease inhibitor is used in its solid form, it is used as a powder, in particular with a purity of 99 weight% or more. It is available, for example, from Sunfit Chemical Co. (China). In one embodiment, the urease inhibitor is in solid particulate form.

The urease inhibitor of the type phosphoric triamide, in particular N-(n-butyl) thiophosphoric triamide (nBTPT) can be applied to the composition comprising the urea ammonium sulphate particles by common coating and blending techniques, well known to the skilled person, such as spray-coating and drum-coating.

The urease inhibitor of the type phosphoric triamide, in particular N-(n-butyl) thiophosphoric triamide (nBTPT) can also be applied to the urea ammonium sulphate-based composition by hot melt mixing, as described in US 5,352,265 (Weston et al., 1994) for urea, which discloses that nBTPT is incorporated into the homogeneous granular fertilizer composition by blending a concentrated solution of nBTPT in a solvent selected from the group consisting of liquid amides, 2-pyrrolidone, and N-alkyl 2-pyrrolidones, directly into the molten urea prior to its granulation.

### Alkaline or alkaline-forming compound:

From WO2017042194, it is known that adding an alkaline or alkaline-forming compound that is able to interact with ammonium sulphate to a UAS-based composition increases the stability of a urease inhibitor of the phosphoric triamide type. A range of inorganic and organic compound may be used in such compositions. As an inorganic compound it may be selected from the group consisting of metal oxides, such as calcium oxide, magnesium oxide, zinc oxide, sodium oxide, aluminium oxide, barium oxide and copper oxide; carbonates, such as calcium carbonate, sodium carbonate, ammonium carbonate, barium carbonate; hydroxides, such as aluminium hydroxide, ammonium hydroxide, sodium hydroxide, potassium hydroxide, calcium hydroxide, magnesium hydroxide, iron hydroxide, barium hydroxide and tetraalkyl /aryl ammonium hydroxides; and acetates, such as sodium acetate, ammonium acetate, magnesium acetate, zinc acetate and barium acetate, and any mixture thereof.

As an organic compound, it may be selected from the group of organic bases consisting of ammonia; amines, such as triethylamine, ethanolamine and triethanolamine; amides, such as sodium amide and magnesium diamide; adenines; amidines; guanidines; anilines; carbamates; thiazoles; triazoles; pyridines; imidazoles; benzimidazoles; histidines; phosphazenes, and any mixture thereof.

The one or more alkaline or alkaline-forming inorganic or organic compounds are present in the composition at a level of 0.0001 to 5.0 weight%, in particular 0.01 to 1.0 weight%, more in particular 0.02 to 0.5 weight%, relative to the total weight of the composition. It is desirable to not use a too large amount of the alkaline or alkaline-forming compound. Using too much may modify the manufacturing process if the compound is added during it, or affect the properties of the particles, such as particle strength, flowability, or tendency to absorb water, when it is applied as a coating. Further, it is not economical to add unnecessary material to a commercialized product. So, it may be desirable to limit the amount of alkaline or alkaline-forming compound to 5.0 weight% compared to the total weight of the UAS-based composition. In one embodiment, the amount of alkaline or alkaline-forming compound is at most 2.0 weight%. In one embodiment, the amount of alkaline or alkaline-forming compound is at most 1.0 weight%. In one embodiment, the amount of alkaline or alkaline-forming compound is at most 0.5 weight%.

In one embodiment, the alkaline or alkaline-forming compound is selected from the group consisting of calcium oxide, zinc oxide, magnesium oxide, calcium carbonate, and mixtures thereof. It was found that calcium oxide, zinc oxide, magnesium oxide and calcium carbonate were particularly suitable for use in the UAS-based compositions. They provide good stability of the urease inhibitor, are commercially available on large scale, not toxic to plants and present a low risk to human health. They were also found adapted to be used in manufacturing process, i.e. they do not disturb processes such as concentration/evaporation, granulation and/or drying, and/or as a coating.

In one embodiment, the alkaline or alkaline-forming compound is applied onto the urea ammonium sulphate-based composition in solution or in particulate form, is melt-mixed with the urea ammonium sulphate-based composition, or a combination thereof. It is well known in the field of fertilizer manufacturing that additional compounds can be added in two main ways. First, they can be added during the manufacturing process. Almost all manufacturing processes of fertilizer compositions involve the formation of a melt which is then granulated using various techniques known in the field. It is then possible to add the additional compounds in the melt before the granulation step. The alkaline or alkaline forming compound may be added in a stream of reagents used to prepare the melt, it may be added in the mother liqueur of the melt, i.e. before a step of concentration/evaporation to reduce the water content of the composition, it may be added to the melt just before the granulation step. It is usually desirable to include a mixing step to ensure that the additional compounds are equally distributed in the melt to obtain homogeneous particles. Secondly, the alkaline or alkaline-forming compound may be added on the fertilizer particles. This allows a greater versatility of the plant where standard particles containing the main fertilizer nutrients are produced in a continuous way and the particles can then be modified according to market requirements or regulations.

### Cation source:

The UAS-based composition comprises 0.0001 to 5.0 weight% of a cation source, comprising a cation selected from the group consisting of Fe²⁺ , Fe³⁺ , Mn²⁺ , Zn²⁺ as zinc sulphate, and Ni²⁺ and wherein the cation source is different from the one or more alkaline or alkaline-forming inorganic or organic compounds.

Within the context of this disclosure, a cation source refers to a chemical entity that dissociates into a cation when added to an aqueous solution at pH = 7 and under standard temperature and pressure conditions, for example from about 15 to 30 °C, and about 10⁵ Pa. The cation source, comprises a cation selected from the group consisting of Fe²⁺ , Fe³⁺ , Mn²⁺ , Zn²⁺ as zinc sulphate, and Ni²⁺.

The cation source is a different compound or chemical entity from the alkaline or alkaline-forming inorganic or organic compound mentioned above. The main role of the alkaline or alkaline-forming inorganic or organic compound is to improve the stability of the urease inhibitor, whereas the main role of the cation source is to prevent ammonia emissions during storage of the solid, particulate composition. The cation source may also improve the stability of the urease inhibitor.

In one embodiment, the cation source comprises Zn²⁺, as zinc sulphate. Zinc is a particularly suitable choice for use in the present invention. It is widely available at a reasonable price, it is not toxic to humans and plants, so it does not introduce any additional precautions in the manufacture, distribution and handling of the fertilizer particles. It was found that zinc sulphate readily absorbs ammonia given off by the UAS-based compositions. Zinc sulphate is available as an anhydrous complex or a hydrate, for example a monohydrate or heptahydrate. It may be desirable to limit the amount of water added to the UAS-based composition, so the monohydrate or anhydrous zinc sulphate may be preferred to the heptahydrate. In one embodiment, the cation source comprises zinc sulphate anhydrous and/or zinc sulphate monohydrate.

In one embodiment, the cation source comprises Mn²⁺, in particular a manganese sulphate. Manganese sulphate may be present as an anhydride complex or hydrate complex. In one embodiment, the cation source comprises Ni²⁺, in particular a nickel sulphate. Nickel sulphate may be present as an anhydride complex or hydrate complex.

The cation source is present in the composition at a level of 0.0001 to 5.0 weight%, in particular 0.02 to 1.0 weight%, more in particular 0.05 to 1.0 weight%, relative to the total weight of the composition. The amount of cation source needs to be adjusted so that it can absorb most of the ammonia given off during storage. Overloading the fertilizer particle is not desirable as it may affect other properties of the particles, such as particle strength, flowability, or tendency to absorb water. Further, it is not economical to add unnecessary material to a commercialized product. So, it may be desirable to limit the amount of cation source to 5.0 weight% compared to the total weight of the UAS-based composition. The amount of cation source may be adapted to the forecast of storage time for each particular batch. Ammonia is released regularly during storage, so the longer the fertilizer particles are stored, the higher loading of cation source should be.

In one embodiment, the weight ratio of alkaline or alkaline-forming compound to the cation source ranges from 1:20 to 1:2, in particular from 1:15 to 1:2, more in particular from 1:10 to 1:4. The rate of ammonia volatilization is proportional to the amount of alkaline or alkaline-forming compounds in the UAS-based composition: the more alkaline compound, the higher the volatilization rate. So, it is desirable to adapt the amount of cation source that will fix the ammonia released to the amount of alkaline compound. In general, it was observed that an excess of cation source, in terms of weight% compared to the total weight of the composition, is desirable to obtain the desired effect on the ammonia volatilization.

In one embodiment, the cation source is applied onto the urea ammonium sulphate-based composition in solution or in particulate form, is melt-mixed with the urea ammonium sulphate-based composition, or a combination thereof.

In one embodiment, anyone or more selected from the group consisting of the urease inhibitor of the type phosphoric triamide, the one or more alkaline or alkaline-forming inorganic or organic compound and the cation source, is applied onto the urea ammonium sulphate-based composition in liquid or in particulate form, is melt-mixed with the urea ammonium sulphate-based composition, or a combination thereof.

### Urea ammonium sulphate

In one embodiment, the UAS is a co-granulated material, in particular obtained from melt-mixing molten urea and solid particulate ammonium sulphate, obtained from compacting finely divided solid urea and ammonium sulphate powders, or obtained from a chemical process for the production of urea from carbon dioxide and ammonia, wherein ammonia is neutralized to form ammonium sulphate (AS) in the urea melt or solution to produce UAS, or wherein the UAS is a particulate blend of particulate urea and particulate ammonium sulphate.

The urea ammonium sulphate is a co-granulated material and may be obtained in several ways, such as by melt-mixing molten urea and solid particulate ammonium sulphate by a process of adding solid particulate ammonium sulphate to molten urea in a granulation step, such as a drum or a pan, as described in US 3,785,796 (Tennessee Valley Authority, 1974), or using a fluidized bed granulator, as described, for example in WO 99/65845 (SKW Stickstoffwerke Piesteritz GmbH, 1999) or as used by Yara in its plants in Sluiskil (The Netherlands). Alternatively, the urea ammonium sulphate may also be prepared according to WO 92/12633 (FMC Corp., USA) or the like, as a compacted material wherein a finely divided solid urea and ammonium sulphate powder is compacted, together with a microcrystalline cellulose to form pastilles, tablets and the like.

Alternatively, the urea ammonium sulphate may be obtained in a chemical process for the production of urea from carbon dioxide and ammonia, wherein ammonia is neutralized to form ammonium sulphate (AS) in the urea melt or solution to produce UAS, as disclosed in WO 2006/004424 A1 (Yara International ASA, Norway), and more specifically using a pipe reactor as a tail end process of a classical urea plant, as disclosed in WO 2006/093413 A1, Yara International ASA, Norway). In a specific embodiment, the ammonia neutralization may be done in the scrubber by sulphuric acid and recycling into the urea melt and granulation.

In the abovementioned cases, the UAS granules are homogeneous in composition, i.e. each granule comprises in principle the same materials.

Alternatively, the UAS may be a particulate blend of particulate urea and particulate ammonium sulphate, for example in powder form, coated onto the particulate urea. In such case, each granule comprises not the same materials.

In addition to urea and ammonium sulphate, the urea ammonium sulphate particles may comprise various additives. For example, when the urea ammonium sulphate particles are produced via granulation, it may be advantageous to add one or more additive to the melt to improve the granulation step.

In one embodiment, and independently of its method of production, UAS may contain from about 0.1 to 60 weight% of ammonium sulphate (AS), in particular 1 weight% or more, more in particular 5.0 weight% or more, even more in particular 10 weight% or more, relative to the total weight of the UAS, of which the remainder of the weight is preferably urea. Commercially available grades may comprise about 23 to about 30 weight% of AS [such as YaraVera^{®} Amidas^{™} (40-0-0 5.5 S), Yara International ASA, which is a homogeneous granular fertilizer containing urea and ammonium sulphate with a 7.3:1 N to S ratio, and YaraVera^{®} Ureas^{™} (38-0-0 7.5 S), Yara International ASA, which is a homogeneous granular fertilizer containing urea and ammonium sulphate with a 5:1 N to S ratio].

In one embodiment, the average particle size (dp50) of the urea ammonium sulphate-based compound should be between 1 mm and 5 cm, in particular between 1 and 20 mm, more in particular between 1 and 10 mm, even more in particular between 1 and 6 mm, even more in particular between 2 and 4 mm, even more in particular between 3.2 and 3.5 mm, as determined by mesh sieve screening. For fertilizer application, it is desirable that the particles should be big enough to be able to distribute them in the field, but they shouldn't be too big to be adapted to the agricultural equipment and machines.

In one embodiment, the urea ammonium sulphate-based composition comprises 40 to 99 weight% of urea, 0.1 to 59 weight% of ammonium sulphate, 0.03 to 0.06 weight% of nBTPT, 0.1 to 1.0 weight% of a zinc sulphate, and 0.01 to 0.1 weight% of magnesium oxide, adding up to 100 weight%, being the total weight of the composition.

### Coating

In one embodiment, the urea ammonium sulphate-based composition according to the invention further comprises anti-caking and/or moisture-repellent and/or anti-dust material, in particular applied onto the particulate components of the urea ammonium sulphate-based composition as a coating. Fertilizer particles have to endure long transport and storage times before being used in the fields. They may also be exposed to environments with high humidity. It is important for the particles to retain their physical properties until the field application, otherwise the field application, for example with a spreader, will not be even or regular. A common method in the field of fertilizer particles is to add anti-caking and/or moisture-repellent and/or anti-dust material to the particles to improve their properties and maintain them during a long period of time.

In one embodiment, the coating comprises at least a non-polar material, in particular a liquid organic material, such as an oil, wax, resin or the like and any mixture thereof and is present in the composition at a level of 0.0001 to 1.0 weight%, in particular 0.02 to 0.5 weight%, more in particular 0.1 to 0.2 weight%, relative to the total weight of the composition.

Examples of suitable anticaking and/or moisture-repellent coatings are vegetable oil (e.g. rapeseed or neem), paraffin and Novoflow anti-caking and/or moisture repellence agents (Novochem Fertilizer Additives, The Netherlands).

In particular, the moisture-repellent coating may be a coating such as disclosed in EP 0768993 A1 (Norsk Hydro ASA) for a nitrogen-containing fertilizer, comprising at least a wax, an oil and a resin which is oil-soluble and miscible with wax, and optionally, a viscoelastic elastomer, such as polyisobutylene or a styrene-isoprene-styrene block copolymer.

### Use

In another aspect, the present disclosure provides for the use of the solid, particulate urea ammonium sulphate-based composition described herein as a fertilizer, in particular for supporting the growth of agricultural products on a sulphur-deficient soil. Sulphur-deficient soils are a growing problem: sulphur is a component of numerous protein enzymes that regulate photosynthesis and nitrogen fixation. So, when sulphur is limiting, the chlorophyll production in the crops is limited, which makes the younger leaves of the plant appear yellow, a symptom sometimes confused with N-deficiency.

### Manufacturing process

In one aspect, this disclosure concerns a method for the manufacture of a solid, particulate, urea ammonium sulphate-based composition. The method comprises the steps of:
1) providing a urea ammonium sulphate-based material;
2) providing 0.0001 to 5.0 weight% of a cation source comprising a cation selected from the group consisting of Fe²⁺ , Fe³⁺ , Mn²⁺ , Zn²⁺ as zinc sulphate, and Ni²⁺;
3) providing 0.0001 to 1.0 weight% of a urease inhibitor of the type phosphoric triamide, in particular N-(n-butyl) thiophosphoric triamide (nBTPT);
4) providing 0.0001 to 5.0 weight% of an alkaline or alkaline-forming compound that is able to interact with ammonium sulphate, selected from the group consisting of metal oxides, metal carbamates, metal hydroxides, metal acetates and any mixtures thereof, or from the group of nitrogen-containing organic bases consisting of ammonia, amines, amides, adenines, amidines, guanidines, anilines, carbamates, thiazoles, triazoles, pyridines; imidazoles, benzimidazoles, histidines, phosphazenes, and any mixture thereof, in particular a compound selected from the group consisting of calcium oxide, zinc oxide, magnesium oxide, calcium carbonate, and mixtures thereof, and
5) optionally, providing coating material, wherein the coating material can increase at least the anticaking and/or moisture repellence and/or anti-dust properties of said urea ammonium sulphate-based composition; and
6) adding the components provided in steps 2), 3), 4) and 5) in any order to the component provided in step 1).

The cation source is different from the one or more alkaline or alkaline-forming inorganic or organic compounds.

The urea ammonium sulphate-based material may be solid particles obtained in several ways as described above.

Alternatively, the urea ammonium sulphate-based material may be a melt comprising urea and ammonium sulphate in various ratios, to which are added the additional components before the mixture is granulating using suitable means as detailed above.

### Kit of parts

The a) cation source, b) urease inhibitor, c) alkaline or alkaline-forming compound according to the invention d) optionally, one or more anti-caking and/or moisture-repellent and/or anti-dust compounds can be added to a urea ammonium sulphate-based material in the claimed amounts to obtain the solid, particulate, urea ammonium sulphate-based composition comprising urea ammonium sulphate, a urease inhibitor of the type phosphoric triamide according to the invention, an alkaline or alkaline-forming compound, and a cation source.

According to one embodiment, the components are provided in separate units. According to another embodiment, the components are premixed and provided in a combined unit.

### Methods

In another aspect, this disclosure concerns a method for reducing the ammonia emissions during storage of an urea ammonium sulphate-based composition comprising a urease inhibitor of the type phosphoric triamide, in particular N-(n-butyl) thiophosphoric triamide (nBTPT), and an alkaline or alkaline-forming compound that is able to interact with ammonium sulphate, selected from the group consisting of metal oxides, metal carbamates, metal hydroxides, metal acetates and any mixtures thereof, or from the group of nitrogen-containing organic bases consisting of ammonia, amines, amides, adenines, amidines, guanidines, anilines, carbamates, thiazoles, triazoles, pyridines; imidazoles, benzimidazoles, histidines, phosphazenes, and any mixture thereof, the method comprising the step of adding to the urea ammonium sulphate-based composition a cation source comprising a cation selected from the group consisting of Fe2+ , Fe3+ , Mn2+ , Zn2+ as zinc sulphate, and Ni2+ , and wherein the cation source is different from the alkaline or alkaline-forming inorganic or organic compound.

The embodiments of the compositions and methods according to the invention will now be illustrated by means of the following non-limitative examples.

### Experimental details:

### 1. Volatilization measurements (ammonia release 2L diffusion kit)

200 g of UAS product, treated with nBTPT/stabilizer/cation source are put in a 2L plastic container. Through the lid, a Draeger tube is placed for the measurement of vol% ammonia. The Draeger tube turns from yellow to bleu/purple when ammonia is absorbed by the tube. The amount of vol% ammonia released can be followed in time.

### 2. nBTPT measurements

For lab scale experiments, 1.2 kg of solid UAS fertilizer material was added to a lab scale drum. In a next step, the nBTPT/stabilizer material was slowly added. A residence time of 10 minutes was applied, and the rotating speed of the drum was consequently the same in each experiment. In case a moisture-repellent coating was added, a nebulizer was used and depending on the order of addition, the moisture-repellent coating was added before or after addition of the nBTPT material. Before use, the moisture-repellent coating was preheated to 80 °C. Larger scale experiments with amounts up to 40 kg of fertilizer material were performed in a concrete mixer.

### Experiment 1 (comprising comparative examples and examples according to the invention)

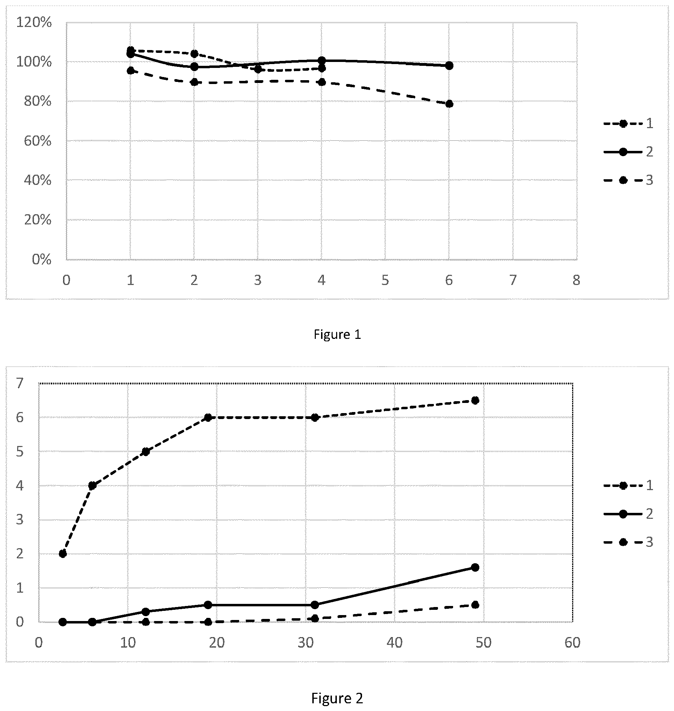

A urea ammonium sulphate-based particle containing about 76 weight% of urea and about 23 weight% of ammonium sulphate (i.e. 40 weight% of nitrogen and 5.5 weight% of sulphur, as expressed in S) was coated with 0.046 weight% of nBTPT, as urease inhibitor, and an inorganic stabilizer, magnesium oxide (0.046 or 0.023 weight%). Optionally, a zinc sulphate, anhydrous zinc sulphate or monohydrate zinc sulphate, was coated on the particles (0.46 weight%). The products were stored separately in bags at room temperature and ambient humidity over several weeks. Product samples were taken at different times from a bag and the amount of nBTPT still present was measured by HPLC according to the procedure CEN 15688-2007, the results are presented in Figure 1.

The X axis represents the time point (in weeks) when the samples were taken. The Y-axis indicates the amount of nBTPT (in % of amount recovered compared to initial samples). The "1" line represents the results for the reference sample where the coating comprised MgO and nBTPT (1/1 ratio, 462 ppm). The "2" line represents the results for the sample where the coating comprised ZnSO₄·H₂O, MgO and nBTPT (10/1/1 ratio, 462 ppm of nBTPT). The "3" line represents the results for a sample where the coating comprised anhydrous ZnSO₄, MgO and nBTPT (10/1/1 ratio, 462 ppm of nBTPT). Samples were taken from each bag only once, as multiple openings increase the decomposition of nBTPT. It can be observed that more nBTPT is recovered in the presence of the monohydrate zinc sulphate, so the urease inhibitor is stabilized by the cation source.

An ammonia volatilization test was also carried out with the samples prepared above and the results are summarized in Figure 2. The X-axis indicates the time point (in days) when the samples were taken from the bags. The Y-axis indicates the amount of ammonia (in % of the amount of ammonium present initially in the product) that is evaporated. The "1" line represents the results for the reference sample where the coating comprised MgO and nBTPT (1/1 ratio, 462 ppm). The "2" line represents the results for the sample where the coating comprised ZnSO₄·H₂O, MgO and nBTPT (10/1/1 ratio, 462 ppm of nBTPT). The "3" line represents the results for a sample where the coating comprised anhydrous ZnSO₄, MgO and nBTPT (10/1/1 ratio, 462 ppm of nBTPT). After seven weeks of storage, the two products comprising the cation source showed a decrease in ammonia volatilization of respectively 60 % for the monohydrate compound, and 92% for the anhydrous compound.

### Experiment 2 (comprising comparative examples and examples according to the invention)

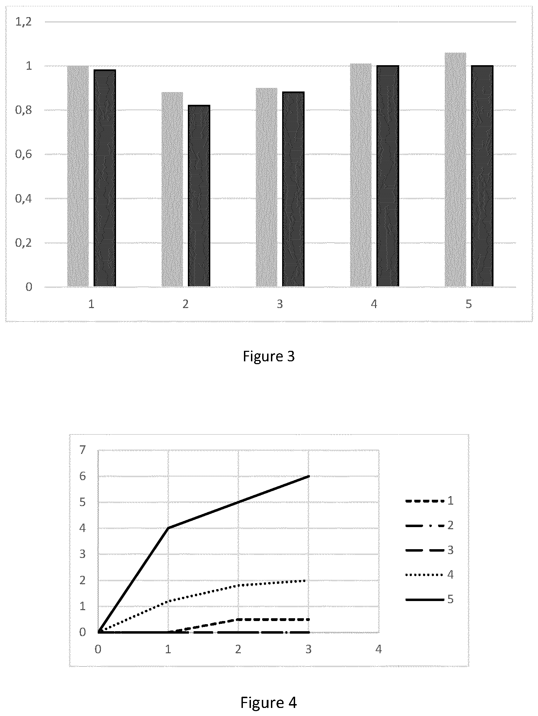

A urea ammonium sulphate-based particle containing about 76 weight% of urea and about 23 weight% of ammonium sulphate (i.e. 40 weight% of nitrogen and 5.5 weight% of sulphur, as expressed in S) was coated with 0.046 weight% of nBTPT, as urease inhibitor, and an inorganic stabilizer, magnesium oxide (0.046 weight%). Optionally, a cation source in solid particulate form, zinc sulphate, iron sulphate, nickel sulphate or manganese sulphate, was coated on the particles. The products were stored separately in bags at room temperature and ambient humidity over three weeks. Product samples were taken at different times and the amount of nBTPT still present was measured by HPLC according to the procedure CEN 15688-2007, the results are presented in Figure 3. The X-axis indicates the sample number: "1" comprises ZnSO₄·H₂O, MgO and nBTPT (3/0.5/1 weight ratio), "2" comprises FeSO₄·7H₂O, MgO and nBTPT (4.6/0.5/1 weight ratio), "3" comprises NiSO₄·6H₂O, MgO and nBTPT (4.4/0.5/1 weight ratio), "4" comprises MnSO₄·H₂O, MgO and nBTPT (2.8/0.5/1 weight ratio), "5" comprises MgO and nBTPT (1/1 weight ratio). The Y-axis indicates the fraction of nBTPT, compared to the amount present initially, recovered in the samples. For each product, two samples were taken: after 1 (left column for each sample number) and 3 weeks (right column). It can be observed that zinc sulphate and manganese sulphate do not lead to an increased decomposition of nBTPT compared to the sample where the coating contains only magnesium oxide and no cation source.

Figure 4 describes the results of the ammonia volatilization tests performed on the same materials. The X axis represents the time point (in weeks) when the samples were taken. The Y-axis indicates the amount of ammonia (in % of the amount of ammonium present initially in the product) that is evaporated. The samples number are identical as in Figure 3. The lines "2" and "3" are identical and located on the baseline (no ammonia detected during the three weeks of the experiment). It can be observed that the four cation sources are efficiently reducing the ammonia volatilization compared to the reference sample comprising only magnesium oxide.

## Claims

1. A solid, particulate, urea ammonium sulphate (UAS)-based composition comprising urea, ammonium sulphate, 0.0001 to 1.0 weight% of a urease inhibitor of the type phosphoric triamide and 0.0001 to 5.0 weight% of one or more alkaline or alkaline-forming inorganic or organic compounds that is able to interact with ammonium sulphate, selected from the group consisting of metal oxides, metal carbamates, metal hydroxides, metal acetates and any mixtures thereof, or from the group of organic bases consisting of ammonia, amines, amides, adenines, amidines, guanidines, anilines, carbamates, thiazoles, triazoles, pyridines; imidazoles, benzimidazoles, histidines, phosphazenes, and any mixture thereof, **characterised in that** the UAS-based composition further comprises 0.0001 to 5.0 weight% of a cation source, comprising a cation selected from the group consisting of Fe²⁺, Fe³⁺, Mn²⁺, Zn²⁺ as zinc sulphate, and Ni²⁺ and wherein the cation source is different from the one or more alkaline or alkaline-forming inorganic or organic compounds.

2. The urea ammonium sulphate-based composition according to claim 1, wherein the cation source is present in the composition at a level of 0.02 to 1.0 weight%, more in particular 0.05 to 1.0 weight%, relative to the total weight of the composition.

3. The urea ammonium sulphate-based composition according to any one of claims 1 to 2, wherein the one or more alkaline or alkaline-forming inorganic or organic compounds are present in the composition at a level of 0.01 to 1.0 weight%, more in particular 0.02 to 0.5 weight%, relative to the total weight of the composition.

4. The urea ammonium sulphate-based composition according to any one of claims 1 to 3, wherein the alkaline or alkaline-forming compound is selected from the group consisting of calcium oxide, zinc oxide, magnesium oxide, calcium carbonate, and mixtures thereof.

5. The urea ammonium sulphate-based composition according to any one of claims 1 to 4 wherein that the urease inhibitor of the type phosphoric triamide is a compound of formula I: 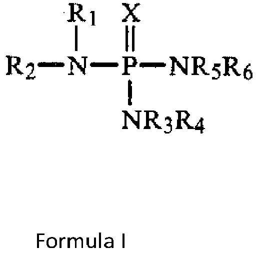 wherein:
- X is oxygen or sulphur;
- R₁ is alkyl, cycloalkenyl, aralkyl, aryl, alkenyl, alkynyl, or cycloalkyl;
- R₂ is hydrogen, alkyl, cycloalkenyl, aralkyl, aryl, alkenyl, alkynyl, or cycloalkyl, or R₁ and R₂ together may form an alkylene or alkenylene chain which may optionally include one or more heteroatoms of divalent oxygen, nitrogen or sulphur completing a 4, 5, 6, 7, or 8 membered ring system; and
- R₃, R₄, R₅ and R₆ are individually hydrogen or alkyl having 1 to 6 carbon atoms; and
- alkyl, cycloalkenyl, aralkyl, aryl, alkenyl, alkynyl, and cycloalkyl refer to compounds having from 1 to 10 carbon atoms, in particular from 1 to 6 carbon atoms; in particular wherein the urease inhibitor is N-(n-butyl) thiophosphoric triamide (nBTPT).

6. The urea ammonium sulphate-based composition according to any one of claims 1 to 5, wherein the urease inhibitor is present at a level of 0.02 to 0.2 weight%, more in particular 0.03 to 0.06 weight%, relative to the total weight of the urea ammonium sulphate-based composition.

7. The urea ammonium sulphate-based composition according to any one of claims 1 to 6, wherein anyone or more selected from the group consisting of the urease inhibitor of the type phosphoric triamide, the one or more alkaline or alkaline-forming inorganic or organic compound and the cation source, is applied onto the urea ammonium sulphate-based composition in liquid or in particulate form, is melt-mixed with the urea ammonium sulphate-based composition, or a combination thereof.

8. The urea ammonium sulphate-based composition according to any one of claims 1 to 7, wherein that the urea ammonium sulphate-based composition further comprises anti-caking and/or moisture-repellent and/or anti-dust material, in particular applied as a coating to the urea ammonium sulphate-based composition.

9. The urea ammonium sulphate-based composition according to any one of claims 1 to 8, wherein the weight ratio of alkaline or alkaline-forming compound to the cation source ranges from 1:20 to 1:2, in particular from 1:15 to 1:2, more in particular from 1:10 to 1:4.

10. The urea ammonium sulphate-based composition according to any one of claims 1 to 9, wherein the UAS is a co-granulated material, in particular obtained from melt-mixing molten urea and solid particulate ammonium sulphate, obtained from compacting finely divided solid urea and ammonium sulphate powders, or obtained from a chemical process for the production of urea from carbon dioxide and ammonia, wherein ammonia is neutralized to form ammonium sulphate (AS) in the urea melt or solution to produce UAS, or wherein the UAS is a particulate blend of particulate urea and particulate ammonium sulphate.

11. The urea ammonium sulphate-based composition according to any one of claims 1 to 10, wherein the urea ammonium sulphate-based composition comprises 40 to 99 weight% of urea, 0.1 to 59 weight% of ammonium sulphate, 0.03 to 0.06 weight% of nBTPT, 0.1 to 1.0 weight% of a zinc sulphate, and 0.01 to 0.1 weight% of magnesium oxide, adding up to 100 weight%, being the total weight of the composition.

12. A method for the manufacture of a solid, particulate, urea ammonium sulphate-based composition as defined in any one of claims 1 to 11, the method comprising the steps of:
1) providing a urea ammonium sulphate-based material;
2) providing 0.0001 to 5.0 weight% of a cation source comprising a cation selected from the group consisting of Fe²⁺, Fe³⁺, Mn²⁺, Zn²⁺ as zinc sulphate, and Ni²⁺;
3) providing 0.0001 to 1.0 weight% of a urease inhibitor of the type phosphoric triamide, in particular N-(n-butyl) thiophosphoric triamide (nBTPT);
4) providing 0.0001 to 5.0 weight% of an alkaline or alkaline-forming compound that is able to interact with ammonium sulphate, selected from the group consisting of metal oxides, metal carbamates, metal hydroxides, metal acetates and any mixtures thereof, or from the group of nitrogen-containing organic bases consisting of ammonia, amines, amides, adenines, amidines, guanidines, anilines, carbamates, thiazoles, triazoles, pyridines; imidazoles, benzimidazoles, histidines, phosphazenes, and any mixture thereof, in particular a compound selected from the group consisting of calcium oxide, zinc oxide, magnesium oxide, calcium carbonate, and mixtures thereof, and
5) optionally, providing coating material, wherein the coating material is able to increase at least the anticaking and/or moisture repellence and/or anti-dust properties of said urea ammonium sulphate-based composition; and
6) adding the components provided in steps 2), 3), 4) and 5) in any order to the component provided in step 1),
the method further **characterized in that** the cation source is different from the one or more alkaline or alkaline-forming inorganic or organic compounds.

13. Method for reducing the ammonia emissions during storage of an urea ammonium sulphate-based composition comprising a urease inhibitor of the type phosphoric triamide, in particular N-(n-butyl) thiophosphoric triamide (nBTPT), and an alkaline or alkaline-forming compound that is able to interact with ammonium sulphate, selected from the group consisting of metal oxides, metal carbamates, metal hydroxides, metal acetates and any mixtures thereof, or from the group of nitrogen-containing organic bases consisting of ammonia, amines, amides, adenines, amidines, guanidines, anilines, carbamates, thiazoles, triazoles, pyridines; imidazoles, benzimidazoles, histidines, phosphazenes, and any mixture thereof, the method comprising the step of adding to the urea ammonium sulphate-based composition a cation source comprising a cation selected from the group consisting of Fe²⁺, Fe³⁺, Mn²⁺, Zn²⁺ as zinc sulphate, and Ni²⁺, and wherein the cation source is different from the alkaline or alkaline-forming inorganic or organic compounds.

## Patentansprüche

1. Feste partikelförmige Zusammensetzung auf Harnstoff-Ammoniumsulfat(UAS)-Basis umfassend Harnstoff, Ammoniumsulfat, 0,0001 bis 1,0 Gew.-% an einem Ureasehemmer des Typs Phosphorsäuretriamid und 0,0001 bis 5,0 Gew.-% an einer oder mehreren basischen oder basenbildenden anorganischen oder organischen Verbindungen, die zur Wechselwirkung mit Ammoniumsulfat fähig sind, ausgewählt aus der Gruppe bestehend aus Metalloxiden, Metallcarbamaten, Metallhydroxiden, Metalacetaten und beliebigen Gemischen davon oder aus der Gruppe von organischen Basen bestehend aus Ammoniak, Aminen, Amiden, Adeninen, Amidinen, Guanidinen, Anilinen, Carbamaten, Thiazolen, Triazolen, Pyridinen, Imidazolen, Benzimidazolen, Histidinen, Phosphazenen und einem beliebigen Gemisch davon, **dadurch gekennzeichnet, dass** die Zusammensetzung auf UAS-Basis ferner 0,0001 bis 5,0 Gew.-% an einer Kationenquelle umfassend ein Kation ausgewählt aus der Gruppe bestehend aus Fe²⁺, Fe³⁺, Mn²⁺, Zn²⁺ als Zinksulfat und Ni²⁺ umfasst und wobei die Kationenquelle von der einen oder den mehreren basischen oder basenbildenden anorganischen oder organischen Verbindungen verschieden ist.

2. Zusammensetzung auf Harnstoff-Ammoniumsulfat-Basis gemäß Anspruch 1, wobei die Kationenquelle in der Zusammensetzung in einem Gehalt von 0,02 bis 1,0 Gew.-%, mehr insbesondere 0,05 bis 1,0 Gew.-%, bezogen auf das Gesamtgewicht der Zusammensetzung vorhanden ist.

3. Zusammensetzung auf Harnstoff-Ammoniumsulfat-Basis gemäß einem der Ansprüche 1 bis 2, wobei die eine oder mehreren basischen oder basenbildenden anorganischen oder organischen Verbindungen in der Zusammensetzung in einem Gehalt von 0,01 bis 1,0 Gew.-%, mehr insbesondere 0,02 bis 0,5 Gew.-%, bezogen auf das Gesamtgewicht der Zusammensetzung vorhanden sind.

4. Zusammensetzung auf Harnstoff-Ammoniumsulfat-Basis gemäß einem der Ansprüche 1 bis 3, wobei die basische oder basenbildende Verbindung ausgewählt ist aus der Gruppe bestehend aus Calciumoxid, Zinkoxid, Magnesiumoxid, Calciumcarbonat und Gemischen davon.

5. Zusammensetzung auf Harnstoff-Ammoniumsulfat-Basis gemäß einem der Ansprüche 1 bis 4, wobei der Ureasehemmer des Typs Phosphorsäuretriamid eine Verbindung der Formel I ist: 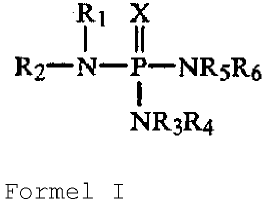 wobei:
- X Sauerstoff oder Schwefel ist;
- R₁ Alkyl, Cycloalkenyl, Aralkyl, Aryl, Alkenyl, Alkinyl oder Cycloalkyl ist;
- R₂ Wasserstoff, Alkyl, Cycloalkenyl, Aralkyl, Aryl, Alkenyl, Alkinyl oder Cycloalkyl ist oder R₁ und R₂ zusammen eine Alkylen- oder Alkenylenkette bilden können, die gegebenenfalls ein oder mehrere Heteroatome von zweiwertigem Sauerstoff, Stickstoff oder Schwefel, die ein 4-, 5-, 6-, 7- oder 8-gliedriges Ringsystem vervollständigen, enthalten kann; und
- R₃, R₄, R₅ und R₆ jeweils Wasserstoff oder Alkyl mit 1 bis 6 Kohlenstoffatomen sind; und
- Alkyl, Cycloalkenyl, Aralkyl, Aryl, Alkenyl, Alkinyl und Cycloalkyl Verbindungen mit 1 bis 10 Kohlenstoffatomen, insbesondere von 1 bis 6 Kohlenstoffatomen, bezeichnen; insbesondere wobei der Ureasehemmer N-(n-Butyl)thiophosphorsäuretriamid (nBTPT) ist.

6. Zusammensetzung auf Harnstoff-Ammoniumsulfat-Basis gemäß einem der Ansprüche 1 bis 5, wobei der Ureasehemmer in einem Gehalt von 0,02 bis 0,2 Gew.-%, mehr insbesondere 0,03 bis 0,06 Gew.-%, bezogen auf das Gesamtgewicht der Zusammensetzung auf Harnstoff-Ammoniumsulfat-Basis vorhanden ist.

7. Zusammensetzung auf Harnstoff-Ammoniumsulfat-Basis gemäß einem der Ansprüche 1 bis 6, wobei eines oder mehrere ausgewählt aus der Gruppe bestehend aus dem Ureasehemmer des Typs Phosphorsäuretriamid, der einen oder mehreren basischen oder basenbildenden anorganischen oder organischen Verbindungen und der Kationenquelle in flüssiger Form oder Partikelform auf die Zusammensetzung auf Harnstoff-Ammoniumsulfat-Basis aufgebracht wird, mit der Zusammensetzung auf Harnstoff-Ammoniumsulfat-Basis schmelzgemischt wird oder eine Kombination davon.

8. Zusammensetzung auf Harnstoff-Ammoniumsulfat-Basis gemäß einem der Ansprüche 1 bis 7, wobei die Zusammensetzung auf Harnstoff-Ammoniumsulfat-Basis ferner Antiback- und/oder feuchtigkeitsabweisendes und/oder staubabweisendes Material umfasst, insbesondere als Beschichtung auf die Zusammensetzung auf Harnstoff-Ammoniumsulfat-Basis aufgebracht.

9. Zusammensetzung auf Harnstoff-Ammoniumsulfat-Basis gemäß einem der Ansprüche 1 bis 8, wobei das Gewichtsverhältnis von basischer oder basenbildender Verbindung zu der Kationenquelle in dem Bereich von 1:20 bis 1:2, insbesondere von 1:15 bis 1:2, mehr insbesondere von 1:10 bis 1:4, liegt.

10. Zusammensetzung auf Harnstoff-Ammoniumsulfat-Basis gemäß einem der Ansprüche 1 bis 9, wobei das UAS ein kogranuliertes Material ist, insbesondere erhalten durch Schmelzmischen von geschmolzenem Harnstoff und festem partikelförmigem Ammoniumsulfat, erhalten durch Kompaktieren von fein verteilten festen Harnstoff- und Ammoniumsulfatpulvern oder erhalten durch ein chemisches Verfahren zur Herstellung von Harnstoff aus Kohlendioxid und Ammoniak, wobei Ammoniak neutralisiert wird, um Ammoniumsulfat (AS) in der Harnstoffschmelze oder -lösung zur Herstellung von UAS zu bilden, oder wobei das UAS ein Partikelgemisch von partikelförmigem Harnstoff und partikelförmigem Ammoniumsulfat ist.

11. Zusammensetzung auf Harnstoff-Ammoniumsulfat-Basis gemäß einem der Ansprüche 1 bis 10, wobei die Zusammensetzung auf Harnstoff-Ammoniumsulfat-Basis 40 bis 99 Gew.-% Harnstoff, 0,1 bis 59 Gew.-% Ammoniumsulfat, 0,03 bis 0,06 Gew.-% nBTPT, 0,1 bis 1,0 Gew.-% an einem Zinksulfat und 0,01 bis 0,1 Gew.-% Magnesiumoxid mit der Summe von 100 Gew.-%, die das Gesamtgewicht der Zusammensetzung ist, umfasst.

12. Verfahren zur Herstellung einer festen partikelförmigen Zusammensetzung auf Harnstoff-Ammoniumsulfat-Basis gemäß einem der Ansprüche 1 bis 11, wobei das Verfahren die Schritte umfasst:
1) Bereitstellen eines Materials auf Harnstoff-Ammoniumsulfat-Basis;
2) Bereitstellen von 0,0001 bis 5,0 Gew.-% an einer Kationenquelle umfassend ein Kation ausgewählt aus der Gruppe bestehend aus Fe²⁺, Fe³⁺, Mn²⁺, Zn²⁺ als Zinksulfat und Ni²⁺;
3) Bereitstellen von 0,0001 bis 1,0 Gew.-% an einem Ureasehemmer des Typs Phosphorsäuretriamid, insbesondere N-(n-Butyl)thiophosphorsäuretriamid (nBTPT);
4) Bereitstellen von 0,0001 bis 5,0 Gew.-% an einer basischen oder basenbildenden Verbindung, die zur Wechselwirkung mit Ammoniumsulfat fähig ist, ausgewählt aus der Gruppe bestehend aus Metalloxiden, Metallcarbamaten, Metallhydroxiden, Metalacetaten und beliebigen Gemischen davon oder aus der Gruppe von stickstoffhaltigen organischen Basen bestehend aus Ammoniak, Aminen, Amiden, Adeninen, Amidinen, Guanidinen, Anilinen, Carbamaten, Thiazolen, Triazolen, Pyridinen, Imidazolen, Benzimidazolen, Histidinen, Phosphazenen und einem beliebigen Gemisch davon, insbesondere einer Verbindung ausgewählt aus der Gruppe bestehend aus Calciumoxid, Zinkoxid, Magnesiumoxid, Calciumcarbonat und Gemischen davon, und
5) gegebenenfalls Bereitstellen von Beschichtungsmaterial, wobei das Beschichtungsmaterial fähig ist, wenigstens die Antiback- und/oder Feuchtigkeitsabweisungs- und/oder Staubabweisungseigenschaften der Zusammensetzung auf Harnstoff-Ammoniumsulfat-Basis zu verbessern; und
6) Zugeben der bei den Schritten 2), 3), 4) und 5) bereitgestellten Komponenten in einer beliebigen Reihenfolge zu der bei Schritt 1) bereitgestellten Komponente,
Wobei das Verfahren ferner **dadurch gekennzeichnet ist, dass** die Kationenquelle von der einen oder den mehreren basischen oder basenbildenden anorganischen oder organischen Verbindungen verschieden ist.

13. Verfahren zur Verringerung der Ammoniakemissionen bei der Lagerung einer Zusammensetzung auf Harnstoff-Ammoniumsulfat-Basis umfassend einen Ureasehemmer des Typs Phosphorsäuretriamid, insbesondere N-(n-Butyl)thiophosphorsäuretriamid (nBTPT), und eine basische oder basenbildende Verbindung, die zur Wechselwirkung mit Ammoniumsulfat fähig ist, ausgewählt aus der Gruppe bestehend aus Metalloxiden, Metallcarbamaten, Metallhydroxiden, Metalacetaten und beliebigen Gemischen davon oder aus der Gruppe von stickstoffhaltigen organischen Basen bestehend aus Ammoniak, Aminen, Amiden, Adeninen, Amidinen, Guanidinen, Anilinen, Carbamaten, Thiazolen, Triazolen, Pyridinen, Imidazolen, Benzimidazolen, Histidinen, Phosphazenen und einem beliebigen Gemisch davon, wobei das Verfahren einen Schritt des Zugebens einer Kationenquelle umfassend ein Kation ausgewählt aus der Gruppe bestehend aus Fe²⁺, Fe³⁺, Mn²⁺, Zn²⁺ als Zinksulfat und Ni²⁺ zu der Zusammensetzung auf Harnstoff-Ammoniumsulfat-Basis umfasst, und wobei die Kationenquelle von den basischen oder basenbildenden anorganischen oder organischen Verbindungen verschieden ist.

## Revendications

1. Composition solide, particulaire, à base de sulfate d'ammonium d'urée (UAS) comprenant de l'urée, du sulfate d'ammonium, 0,0001 à 1,0 % en poids d'un inhibiteur d'uréase du type triamide phosphorique et 0,0001 à 5,0 % en poids d'un ou plusieurs composés inorganiques ou organiques alcalins ou alcalinisants qui sont capables d'interagir avec le sulfate d'ammonium, choisis dans le groupe constitué par des oxydes métalliques, des carbamates métalliques, des hydroxydes métalliques, des acétates métalliques et de quelconques mélanges correspondants, ou dans le groupe de bases organiques constitué par l'ammoniac, des amines, des amides, des adénines, des amidines, des guanidines, des anilines, des carbamates, des thiazoles, des triazoles, des pyridines , des imidazoles, des benzimidazoles, des histidines, des phosphazènes et un quelconque mélange correspondant, **caractérisée en ce que** la composition à base d'UAS comprend en outre 0,0001 à 5,0 % en poids d'une source de cation, comprenant un cation choisi dans le groupe constitué par Fe²⁺, Fe³⁺, Mn²⁺, Zn²⁺ en tant que sulfate de zinc et Ni²⁺ et la source de cation étant différente du ou des composés inorganiques ou organiques alcalins ou alcalinisants.

2. Composition à base de sulfate d'ammonium d'urée selon la revendication 1, la source de cation étant présente dans la composition à un taux de 0,02 à 1,0 % en poids, plus particulièrement de 0,05 à 1,0 % en poids, par rapport au poids total de la composition.

3. Composition à base de sulfate d'ammonium d'urée selon l'une quelconque des revendications 1 à 2, le ou les composés inorganiques ou organiques alcalins ou alcalinisants étant présents dans la composition à un taux de 0,01 à 1,0 % en poids, plus particulièrement de 0,02 à 0,5 % en poids, par rapport au poids total de la composition.

4. Composition à base de sulfate d'ammonium d'urée selon l'une quelconque des revendications 1 à 3, le composé alcalin ou alcalinisant étant choisi dans le groupe constitué par l'oxyde de calcium, l'oxyde de zinc, l'oxyde de magnésium, le carbonate de calcium et des mélanges correspondants.

5. Composition à base de sulfate d'ammonium d'urée selon l'une quelconque des revendications 1 à 4, l'inhibiteur d'uréase du type triamide phosphorique étant un composé de formule I : 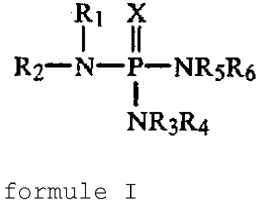
- X étant oxygène ou soufre ;
- R₁ étant alkyle, cycloalcényle, aralkyle, aryle, alcényle, alcynyle ou cycloalkyle ;
- R₂ étant hydrogène, alkyle, cycloalcényle, aralkyle, aryle, alcényle, alcynyle ou cycloalkyle, ou R₁ et R₂ pouvant former ensemble une chaîne alkylène ou alcénylène qui peut éventuellement comprendre un ou plusieurs hétéroatomes d'oxygène, d'azote ou de soufre divalent complétant un système cyclique à 4, 5, 6, 7 ou 8 chaînons ; et
- R₃, R₄, R₅ et R₆ étant individuellement hydrogène ou alkyle ayant 1 à 6 atomes de carbone ; et
alkyle, cycloalcényle, aralkyle, aryle, alcényle, alcynyle et cycloalkyle faisant référence à des composés ayant de 1 à 10 atomes de carbone, en particulier de 1 à 6 atomes de carbone ; en particulier, l'inhibiteur d'uréase étant le triamide N-(n-butyl)thiophosphorique (nBTPT).

6. Composition à base de sulfate d'ammonium d'urée selon l'une quelconque des revendications 1 à 5, l'inhibiteur d'uréase étant présent à un taux de 0,02 à 0,2 % en poids, plus particulièrement de 0,03 à 0,06 % en poids, par rapport au poids total de la composition à base de sulfate d'ammonium d'urée.

7. Composition à base de sulfate d'ammonium d'urée selon l'une quelconque des revendications 1 à 6, l'un quelconque ou plusieurs choisis dans le groupe constitué par l'inhibiteur d'uréase du type triamide phosphorique, le ou les composés inorganiques ou organiques alcalins ou alcalinisants et la source de cation, étant appliqué(s) sur la composition à base de sulfate d'ammonium d'urée sous forme liquide ou sous forme particulaire, étant mélangé(s) en fusion avec la composition à base de sulfate d'ammonium d'urée ou une combinaison correspondante.

8. Composition à base de sulfate d'ammonium d'urée selon l'une quelconque des revendications 1 à 7, la composition à base de sulfate d'ammonium d'urée comprend en outre une matière antimottante et/ou répulsive pour l'humidité et/ou antipoussière, en particulier appliquée en tant qu'un revêtement sur la composition à base de sulfate d'ammonium d'urée.

9. Composition à base de sulfate d'ammonium d'urée selon l'une quelconque des revendications 1 à 8, le rapport en poids de composé alcalin ou alcalinisant sur la source de cation se situant dans la plage de 1 : 20 à 1 : 2, en particulier de 1 : 15 à 1 : 2, plus particulièrement de 1 : 10 à 1 : 4.

10. Composition à base de sulfate d'ammonium d'urée selon l'une quelconque des revendications 1 à 9, l'UAS étant un matériau co-granulé, en particulier obtenu par mélange en fusion d'urée fondue et de sulfate d'ammonium particulaire solide, obtenu en compactant des poudres d'urée et de sulfate d'ammonium solides finement divisées, ou obtenu d'un processus chimique pour la production d'urée à partir de dioxyde de carbone et d'ammoniac, l'ammoniac étant neutralisé pour former du sulfate d'ammonium (AS) dans la masse fondue ou la solution d'urée pour produire de l'UAS, ou l'UAS étant un mélange particulaire d'urée particulaire et de sulfate d'ammonium particulaire.

11. Composition à base de sulfate d'ammonium d'urée selon l'une quelconque des revendications 1 à 10, la composition à base de sulfate d'ammonium d'urée comprenant 40 à 99 % en poids d'urée, 0,1 à 59 % en poids de sulfate d'ammonium, 0,03 à 0,06 % en poids de nBTPT, 0,1 à 1,0 % en poids d'un sulfate de zinc et 0,01 à 0,1 % en poids d'oxyde de magnésium, totalisant jusqu'à 100 % en poids, qui est le poids total de la composition.

12. Procédé pour la fabrication d'une composition solide, particulaire, à base de sulfate d'ammonium d'urée telle que définie dans l'une quelconque des revendications 1 à 11, le procédé comprenant les étapes de :
1) fourniture d'une matière à base de sulfate d'ammonium d'urée ;
2) fourniture de 0,0001 à 5,0 % en poids d'une source de cation comprenant un cation choisi dans le groupe constitué par Fe²⁺, Fe³⁺, Mn²⁺, Zn²⁺ en tant que sulfate de zinc et Ni²⁺ ;
3) fourniture de 0,0001 à 1,0 % en poids d'un inhibiteur d'uréase du type triamide phosphorique, en particulier le triamide N-(n-butyl)thiophosphorique (nBTPT) ;
4) fourniture de 0,0001 à 5,0 % en poids d'un composé alcalin ou alcalinisant qui est capable d'interagir avec le sulfate d'ammonium, choisi dans le groupe constitué par des oxydes métalliques, des carbamates métalliques, des hydroxydes métalliques, des acétates métalliques et de quelconques mélanges correspondants, ou dans le groupe de bases organiques contenant de l'azote constitué par l'ammoniac, des amines, des amides, des adénines, des amidines, des guanidines, des anilines, des carbamates, des thiazoles, des triazoles, des pyridines , des imidazoles, des benzimidazoles, des histidines, des phosphazènes et un quelconque mélange correspondant, en particulier un composé choisi dans le groupe constitué par l'oxyde de calcium, l'oxyde de zinc, l'oxyde de magnésium, le carbonate de calcium et des mélanges correspondants, et
5) éventuellement, fourniture d'une matière de revêtement, la matière de revêtement étant capable d'augmenter au moins les propriétés antimottantes et/ou de répulsion de l'humidité et/ou antipoussières de ladite composition à base de sulfate d'ammonium d'urée ; et
6) ajout des composants fournis dans les étapes 2), 3), 4) et 5) selon un ordre quelconque au composant fourni dans l'étape 1),
le procédé étant en outre **caractérisé en ce que** la source de cation est différente du ou des composés inorganiques ou organiques alcalins ou alcalinisants.

13. Procédé pour la réduction des émissions d'ammoniac pendant le stockage d'une composition à base de sulfate d'ammonium d'urée comprenant un inhibiteur d'uréase du type triamide phosphorique, en particulier le triamide N-(n-butyl)thiophosphorique (nBTPT), et un composé alcalin ou alcalinisant qui est capable d'interagir avec le sulfate d'ammonium, choisi dans le groupe constitué par des oxydes métalliques, des carbamates métalliques, des hydroxydes métalliques, des acétates métalliques et de quelconques mélanges correspondants, ou dans le groupe de bases organiques contenant de l'azote constitué par l'ammoniac, des amines, des amides, des adénines, des amidines, des guanidines, des anilines, des carbamates, des thiazoles, des triazoles, des pyridines , des imidazoles, des benzimidazoles, des histidines, des phosphazènes et un quelconque mélange correspondant, le procédé comprenant l'étape d'ajout à la composition à base de sulfate d'ammonium d'urée d'une source de cation comprenant un cation choisi dans le groupe constitué par Fe²⁺, Fe³⁺, Mn²⁺, Zn²⁺ en tant que sulfate de zinc et Ni²⁺, et la source de cation étant différente des composés inorganiques ou organiques alcalins ou alcalinisants.
